Europäisches Patentamt

European Patent Office

Office européen des brevets

(19)

(11) Veröffentlichungsnummer : **0 147 712**
**B1**

(12) # EUROPÄISCHE PATENTSCHRIFT

(45) Veröffentlichungstag der Patentschrift :
09.09.87

(21) Anmeldenummer : **84115110.3**

(22) Anmeldetag : **10.12.84**

(51) Int. Cl.⁴ : **B 62 D 33/06**

(54) **Nutzfahrzeug mit kippbarem in der Fahrstellung verriegelbarem Fahrerhaus.**

(30) Priorität : **22.12.83 DE 8336825 U**

(43) Veröffentlichungstag der Anmeldung :
**10.07.85 Patentblatt 85/28**

(45) Bekanntmachung des Hinweises auf die Patenterteilung : **09.09.87 Patentblatt 87/37**

(84) Benannte Vertragsstaaten :
**DE FR GB IT NL SE**

(56) Entgegenhaltungen :
**US-A- 3 797 882**

(73) Patentinhaber : **Iveco Magirus Aktiengesellschaft**
**Schillerstrasse 2**
**D-7900 Ulm/Donau (DE)**

(72) Erfinder : **Schumann, Ralf, Dipl.-Ing.**
**Weihungszeller Strasse 7**
**D-7901 Illerrieden 2 (DE)**

(74) Vertreter : **Socha, Peter**
**Iveco Magirus AG Postfach 2740 Schillerstrasse 2**
**D-7900 Ulm (DE)**

**Beschreibung**

Die Erfindung betrifft ein Nutzfahrzeug mit kippbarem, in der Fahrstellung verriegelbarem Fahrerhaus gemäß dem Oberbegriff des Anspruchs 1.

Bei einem Lastkraftwagen mit kippbarem Fahrerhaus ist aus DE-U-6 926 273 eine Einrichtung zum Sperren der Gebrauchs- oder Fahrstellung des Fahrerhauses bekannt, die an einem der miteinander verriegelbaren Teile wie dem Fahrerhaus gehaltert ist und mit einem an dem anderen Teil wie dem Fahrgestell sitzenden, vorzugsweise zapfenförmigen Stützglied zusammenwirkt, um eine Verriegelung sicherzustellen. Die Verriegelungseinrichtung ist vergleichsweise kompliziert im Aufbau und weist eine das Stützglied hintergreifende bzw. freigebende Sperrplatte, ein die Sperrplatte in der Sperrlage haltendes gegen eine Federbelastung rückstellbares Riegelglied sowie eine Riegelfalle auf, die beim Übergang der Sperrplatte in die Offenstellung von dieser in eine Freigabestellung mitgenommen wird. Außerdem sind Anschlagmittel an einem mit dem Riegelglied und der Riegelfalle zusammenwirkenden Stellglied sowie Anschlagmittel an der Sperrplatte vorgesehen, durch die das Stellglied aus der Offenstellung selbsttätig in die der Sperrstellung zugeordnete Ausgangslage übergeführt werden kann.

Einfachere bekannte Verriegelungseinrichtungen an kippbaren Fahrerhäusern sehen Zusatzfanghaken mit Fangbügel und Anschlußelementen vor. Die Zusatzfanghaken können hierbei in Richtung Fahrerhaus-Verriegelungs-Stellung federvorgespannt sein. Soll ein Fahrerhaus aus der zurückgekippten Fahrstellung vorgekippt werden, wird der Zusatzfanghaken entgegen der Kraft der Vorspannungsfeder aus dem Fangbügel gelöst und anschließend die hydraulische Fahrerhaus-Kippanlage mit doppelt wirkendem Hubzylinder bei entsprechender Ventilhebelstellung von Hand oder durch Motor betätigt, um das Vorkippen des Fahrerhauses durch hydraulische Kraftunterstützung durchzuführen. Entsprechend wird bei der anderen Ventilhebelstellung das Fahrerhaus wieder zurückgekippt. Ein solches Nutzfahrzeug gemäß dem Oberbegriff des Anspruchs 1, ist aus der US-A-3 797 882 bekannt.

Aufgabe der Erfindung ist die Schaffung eines Nutzfahrzeuges mit kippbarem, in der Fahrstellung verriegelbarem Fahrerhaus der eingangs genannten Art, dessen Verriegelungseinrichtung besonders einfach im Aufbau und dennoch zuverlässig im Betrieb ist.

Gelöst wird die der Erfindung zugrundeliegende Aufgabe durch die im kennzeichnenden Teil des Anspruchs 1 angegebenen Merkmale. Erfindungsgemäß ist mithin die Verriegelungseinrichtung in der ohnehin vorhandenen hydraulischen Kippeinrichtung integriert, die als Hilfsverriegelung ausgenützt wird. Die hydraulische Fahrerhaus-Kippeinrichtung mit doppelt wirkendem Hubzylinder verhindert nämlich bei richtiger Ventilhebelstellung das Vorkippen des Fahrerhauses. Um die richtige Ventilhebelstellung (Fahrerhaus-Zurückkip-Stellung) des Umschaltventils fortwährend zu garantieren bzw. sicherzustellen, ist erfindungsgemäß eine Rückstellfeder vorgesehen, die das Umschaltventil in die Rückkippstellung des Fahrerhauses vorspannt. Dadurch wird durch das Hydraulikmedium und den doppelt wirkenden Hubzylinder das Fahrerhaus in der zurückgekippten Fahrstellung grundsätzlich gesichert. Wird versehentlich die hydraulische Kippeinrichtung betätigt, so wird das Fahrerhaus zusätzlich in der zurückgekippten Fahrstellung kraftunterstützt gehalten, kann also nicht versehentlich nach vorne kippen oder eingerastete separate Verriegelungseinrichtungen des Fahrerhauses in hohem Maße beanspruchen oder beschädigen, wie dies nach dem Stand der Technik möglich ist. Durch die Erfindung können Zusatzfanghaken mit Fangbügeln und Anschlußelementen, Sperrplatten, Riegelfallen und dergleichen als separate Verriegelungsmittel zwischen Fahrerhaus und Fahrgestell entfallen. Trotz des einfachen Aufbaus ist ein zuverlässiger Betrieb sichergestellt. Soll das Fahrerhaus vorgekippt werden, so wird von Hand der Ventilumschaltknebel gegen die Kraft der Rückstellfeder in einer Weise betätigt, daß das mit dem Ventilumschaltknebel verbundene Umschaltventil in die Vorkipp-Stellung schaltet. Die Vorkipp-Stellung des Umschaltventils muß durch dauernde Handkraft am Ventilumschaltknebel aufgebracht werden. Nur dann kann bei Motor- oder Handbetätigung der hydraulischen Kippeinrichtung des Fahrerhauses ein Vorkippen durchgeführt werden. Ersichtlich sind somit zwei voneinander getrennte Betätigungsvorgänge durchzuführen, um ein Vorkippen zu bewerkstelligen. Dies ergibt eine erhöhte Sicherheit ; ein versehentliches Vorkippen des Fahrerhauses durch Fehlbetätigung oder bei plötzlicher Fahrzeugverzögerung ist somit ausgeschlossen.

Eine vorteilhafte Weiterbildung der Erfindung kennzeichnet sich dadurch, daß die Rückstellfeder eine Torsionsfeder ist die auf einer axial drehbaren Verbindungsstange zwischen Ventilumschaltknebel und Umschaltventil angeordnet und deren Enden an der Verbindungsstange und an einem gehäusefesten Teil der hydraulischen Kippeinrichtung befestigt sind.

Alternativ kann die Rückstellfeder auch als Zugfeder ausgebildet sein.

Weitere zweckmäßige Ausgestaltungen der Erfindung sind in den Unteransprüchen angeführt.

Die Erfindung wird nachfolgend anhand eines Ausführungsbeispiels unter Bezugnahme auf die Zeichnung näher erläutert ; es zeigen :

Figur 1 einen Teil der hydraulischen Kippeinrichtung mit integrierter Fahrerhausverriegelungseinrichtung in teilweise aufgebrochener schematischer Seitenansicht, und

2

Figur 2 den Teil Kippeinrichtung nach Fig. 1 in einer schematischen Stirnansicht.

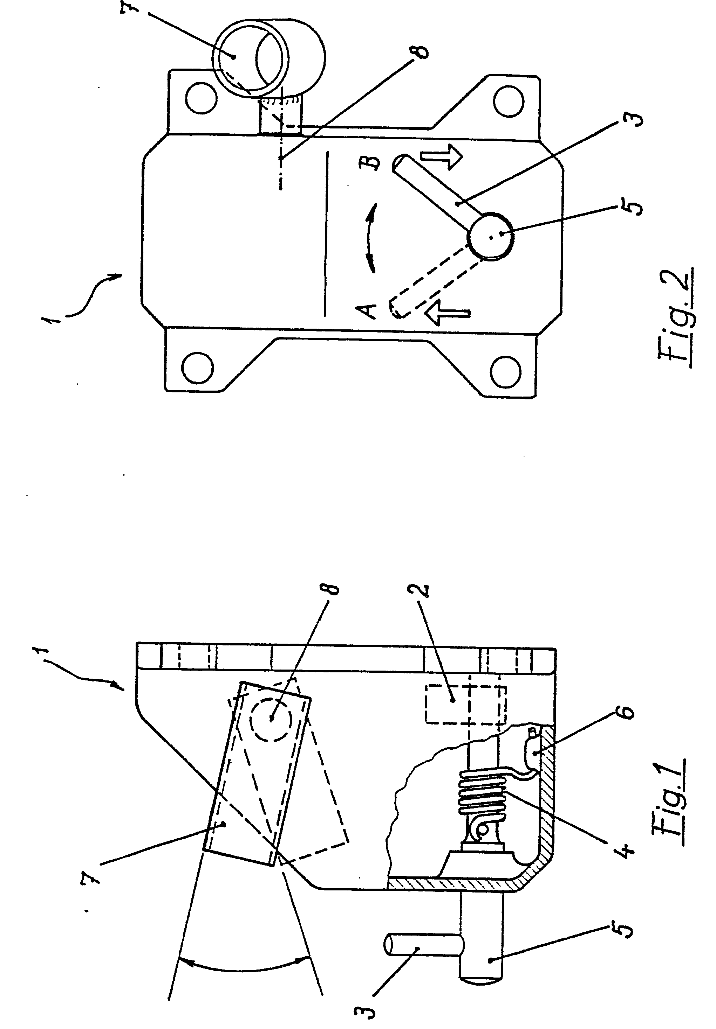

Zum Bewirken des Kippens eines Fahrerhauses mittels Drucköl ist eine hydraulische Kippeinrichtung 1 vorgesehen, deren fahrzeugfester Teil gemäß Fig. 1 eine Handpumpe umfaßt, die über ein Umschaltventil 2 mit einem (nicht veranschaulichten) Hydraulikkolben in einer hydraulischen Verbindung steht, welcher seinerseits den eigentlichen Kippvorgang durchführt. Das Umschaltventil 2 ist als Wechselventil ausgebildet und besitzt in Verlängerung seiner Drehachse eine Verbindungsstange 5, die durch das Gehäuse der Hadpumpe hervorsteht, wobei das hervorstehende Ende der Verbindungsstange 5 mit einem radialen Ventilumschaltknebel 3 verbunden ist, der von Hand um einen Drehwinkel geschwenkt werden kann, um das Umschaltventil 2 von der Fahrerhaus-Zurückkipp-Stellung B in die Fahrerhaus-Vorkipp-Stellung zu betätigen.

Auf der axial drehbaren Verbindungsstange 5 zwischen Ventilumschaltknebel 3 und Umschaltventil 2 ist eine Rückstellfeder 4 in Form einer Torsionsfeder angeordnet, deren Enden an der Verbindungsstange 5 und an einem gehäusefesten Teil 6 der hydraulischen Kippeinrichtung 1 befestigt sind. Die Rückstellfeder 4 ist in einer Weise angeordnet, daß der Ventilumschaltknebel 3 bzw. das Umschaltventil 2 in die Fahrerhaus-Zurückkipp-Stellung B vorgespannt sind. Mithin ist bei Nichtbetätigung des Ventilumschaltknebels 3 die (nicht veranschaulichte) Hydraulikverbindung zwischen Hydraulikkolben der Kippeinrichtung 1 und Umschaltventil 2 gesperrt, so daß das Fahrerhaus des Nutzfahrzeuges in einer verriegelten zurückgekippten Fahrstellung gehalten wird, selbst wenn die Handpumpe der hydraulischen Kippeinrichtung 1 versehentlich betätigt wird oder infolge plötzlicher Fahrzeugverzögerung das Fahrerhaus nach vorn beschleunigt wird.

Soll das Fahrerhaus nach vorne gekippt werden, muß einerseits von Hand der Ventilumschaltknebel 3 gegen die Kraft der Rückstellfeder 4 aus der Fahrerhaus-Zurückkipp-Stellung B in die Fahrerhaus-Vorkipp-Stellung A geschwenkt und in dieser Stellung gehalten werden. Gleichzeitig muß die Handpumpe in Betrieb gesetzt werden, um mittels Drucköl das Fahrerhaus bei geöffnetem Umschaltventil 2 nach vorne zu kippen. Eine Fehlbetätigung der Fahrerhaus-Kippanlage ist mithin ausgeschlossen. Die Handpumpe wird in der Weise in Betrieb gesetzt, daß ein (nicht veranschaulichter) Betätigungshebel in die Hebelaufnahme 7 endseitig eingesetzt wird, die um eine Querachse 8 schwenkbar ist. Am oberen freien nicht in die Aufnahme 7 eingesetzten Ende des Betätigungshebels wird die Pumpbewegung von Hand vollzogen.

**Patentansprüche**

1. Nutzfahrzeug mit kippbarem Fahrerhaus, das durch eine hydraulische Kippeinrichtung (1) mit doppelt wirkendem Hubzylinder bei entsprechender Stellung eines Umschaltventils (2) durch Betätigung eines Ventilumschaltknebels (3) vor- und in die Fahrstellung zurückgekippt werden kann, wobei eine Verriegelungseinrichtung vorgesehen ist, die das Fahrerhaus in der Zurückkipp-Stellung (B) sichert, dadurch gekennzeichnet, daß die Verriegelungseinrichtung das Umschaltventil (2) mit angekoppeltem handbetätigbarem Ventilumschaltknebel (3) der hydraulischen Kippeinrichtung (1) umfaßt, wobei eine Rückstellfeder (4) vorgesehen ist, die das Umschaltventil (2) mit Ventilumschaltknebel (3) in die Fahrerhaus-Zurückkipp-Stellung (B) vorspannt.

2. Nutzfahrzeug nach Anspruch 1, dadurch gekennzeichnet, daß die Rückstellfeder (4) eine Torsionsfeder ist, die auf einer axial drehbaren Verbindungsstange (5) zwischen Ventilumschaltknebel (3) und Umschaltventil (2) angeordnet ist und deren Enden an der Verbindungsstange (5) und an einem gehäusefesten Teil (6) der hydraulischen Kippeinrichtung (1) befestigt sind.

3. Nutzfahrzeug nach Anspruch 1, dadurch gekennzeichnet, daß die Rückstellfeder eine Zugfeder ist, deren eines Ende exzentrisch zur axial drehbaren Verbindungsstange zwischen Ventilumschaltknebel und Umschaltventil knebel- oder umschaltventilseitig befestigt und deren anderes Ende mit einem gehäusefesten Teil der hydraulischen Kippeinrichtung fest verbunden ist.

4. Nutzfahrzeug nach einem der Ansprüche 1 bis 3, dadurch gekennzeichnet, daß eine mit dem Umschaltventil (2) verbundene Anzeige vorgesehen ist, die die Stellung des Knebels (3) bzw. des Umschaltventils (2) anzeigt.

5. Nutzfahrzeug nach einem der Ansprüche 1 bis 4, dadurch gekennzeichnet, daß eine mit dem Kippeinrichtungsgehäuse verbundene mechanische Sperreinrichtung vorgesehen ist, durch die der Ventilumschaltknebel (3) in der Fahrerhaus-Zurückkipp-Stellung (B) gesperrt gehalten werden kann.

**Claims**

1. A commercial vehicle fitted with a tiltable cab arranged to be tilted forwardly and to be tilted rearwardly into the driving position by means of a hydraulic tilting device (1) comprising a double-acting lifting cylinder and a change-over valve (2) actuatable by a valve-setting tommy bar (3), the direction of the tilting motion being determined by the valve's setting brought about by its actuation, in which a locking mechanism serving to secure the cab in its rearwardly tilted position (B) is provided, characterized in that the locking mechanism includes the tilting device's (1) change-over valve (2) and the valve-setting tommy bar (3) attached thereto, and in that the locking mechanism also includes a restoring spring (4) biasing the valve (2) and the tommy bar (3) into the setting appropriate to the cab's rearwardly tilted position (B).

2. A commercial vehicle according to claim 1, characterized in that the restoring spring (4) is a torsion spring arranged in the space between the tommy bar (3) and the valve (2) on an axially rotatable connecting bar (5), and in that the spring ends are secured to the connecting bar (5) and, respectively, to an element (6) fastened to the casing of the hydraulic tilting device (1).

3. A commercial vehicle according to claim 1, characterized in that the restoring spring is a tension spring one end of which is secured — eccentrically to an axially rotatable connecting bar — in the space between the tommy bar and the valve to either the tommy bar or the valve and the other end of which is fixed to an element fastened to the casing of the hydraulic tilting device.

4. A commercial vehicle according to any of the claims 1 to 3, characterized in that an indicator for indicating the position of the tommy bar (3) and, respectively, the setting of the valve (2) is connected to the valve (2).

5. A commercial vehicle according to any of the claims 1 to 4, characterized in that the tilting device is provided with a mechanically operable locking device joined to its casing and serving to lock the valve-setting tommy bar (3) in its position appropriate to the cab's rearwardly tilted position (B).

**Revendications**

1. Véhicule utilitaire à cabine basculante qui peut être basculée vers l'avant ou être basculée en retour vers la position de conduite par une installation de basculement (1) hydraulique à vérin à double effet pour une position correspondante d'une vanne d'inversion (2) en actionnant un levier de commutation de vanne (3), avec une installation de verrouillage qui bloque la cabine en position basculée en retour, (B), véhicule caractérisé en ce que l'installation de verrouillage comprend la vanne d'inversion (2) et le levier de commutation de vanne (3) à commande manuelle qui lui est associé dans l'installation de basculement hydraulique (1), avec un ressort de rappel (4) qui assure la précontrainte de la vanne d'inversion (2) et du levier de commutation de vanne (3) dans la position de basculement en retour (B) de la cabine.

2. Véhicule utilitaire selon la revendication 1, caractérisé en ce que le ressort de rappel (4) est un ressort de torsion qui est monté sur une tige de liaison (5) tournant axialement et une vanne de commutation (3), une extrémité du ressort étant fixée à la tige de liaison (5) et l'autre à une partie (6) de l'installation de basculement hydraulique (1), partie solidaire de la cabine.

3. Véhicule utilitaire selon la revendication 1, caractérisé en ce que le ressort de rappel est un ressort de traction dont une extrémité est fixée de manière excentrée par rapport à la tige de liaison tournant axialement, entre le levier de commutation de la vanne et/ou sur le côté de la vanne d'inversion, l'autre extrémité étant reliée solidairement à une partie de l'installation de basculement hydraulique appartenant à la cabine.

4. Véhicule utilitaire selon l'une des revendications 1 à 3, caractérisé par un moyen d'affichage relié à la vanne d'inversion (2) qui indique la position du levier (3) ou de la vanne d'inversion (2).

5. Véhicule utilitaire selon l'une des revendications 1 à 4, caractérisé par une installation de blocage mécanique reliée au boîtier de l'installation de basculement qui maintient verrouillé le levier de commutation (3) dans la position de basculement en retour (B) de la cabine.

*Fig. 2*

*Fig.1*